# EUROPEAN PATENT APPLICATION

(11) **EP 3 101 599 A2**
(43) Date of publication of application: **07.12.2016**
(21) Application number: 16172516.3
(22) Date of filing: 01.06.2016
(51) Int. Cl.: G06N 5/04, G06N 99/00

(54) **ADVANCED ANALYTICAL INFRASTRUCTURE FOR MACHINE LEARNING**

(30) Priority: 04.06.2015 US 201514730655
(71) Applicant: The Boeing Company, Chicago, IL 60606-2016 (US)
(72) Inventor: STURLAUGSON, Liessman E., Chicago, IL 60606-2016 (US); ETHINGTON, James M., Chicago, IL 60606-2016 (US)
(74) Representative: Morrall, Jonathan Ian McLachlan

(57) **Abstract**

Machine learning systems (10) and computerized methods (100) to compare candidate machine learning algorithms are disclosed. The machine learning system (10) comprises a machine learning algorithm library (22), a data input module (20) to receive a dataset and a selection of machine learning models (32) derived from the machine learning algorithm library (22), an experiment module (30), and an aggregation module (40). The experiment module (30) is configured to train and evaluate (106) each machine learning model (32) to produce a performance result for each machine learning model (32). The aggregation module (40) is configured to aggregate the performance results for all of the machine learning models (32) to form performance comparison statistics. Computerized methods (100) include receiving (102) a dataset, receiving (104) a selection of machine learning models (32), training and evaluating (106) each machine learning model (32) to produce a performance result for each machine learning model (32), aggregating (108) the performance results to form performance comparison statistics, and presenting (110) the performance comparison statistics.

## Description

### FIELD

The present disclosure relates to advanced analytical infrastructure for machine learning.

### BACKGROUND

Machine learning is a process to analyze data in which the dataset is used to determine a model (also called a rule or a function) that maps input data (also called explanatory variables or predictors) to output data (also called dependent variables or response variables). One type of machine learning is supervised learning in which a model is trained with a dataset including known output data for a sufficient number of input data. Once a model is trained, it may be deployed, i.e., applied to new input data to predict the expected output.

Machine learning may be applied to regression problems (where the output data are numeric, e.g., a voltage, a pressure, a number of cycles) and to classification problems (where the output data are labels, classes, and/or categories, e.g., pass-fail, failure type, etc.). For both types of problems, a broad array of machine learning algorithms are available, with new algorithms the subject of active research. For example, artificial neural networks, learned decision trees, and support vector machines are different classes of algorithms which may be applied to classification problems. And, each of these examples may be tailored by choosing specific parameters such as learning rate (for artificial neural networks), number of trees (for ensembles of learned decision trees), and kernel type (for support vector machines).

The large number of machine learning options available to address a problem makes it difficult to choose the best option or even a well-performing option. The amount, type, and quality of data affect the accuracy and stability of training and the resultant trained models. Further, problem-specific considerations, such as tolerance of errors (e.g., false positives, false negatives) scalability, and execution speed, limit the acceptable choices.

Therefore, there exists a need for comparing machine learning models for applicability to various specific problems.

### SUMMARY

A machine learning system may be configured to compare candidate machine learning algorithms for a particular data analysis problem. The machine learning system comprises a machine learning algorithm library, a data input module, an experiment module, and an aggregation module. The machine learning algorithm library includes a plurality of machine learning algorithms configured to be tested with a common interface. The data input module is configured to receive a dataset and a selection of machine learning models. Each machine learning model includes a machine learning algorithm from the machine learning algorithm library and one or more associated parameter values. The experiment module is configured to train and evaluate each machine learning model to produce a performance result for each machine learning model. The aggregation module is configured to aggregate the performance results for all of the machine learning models to form performance comparison statistics.

Computerized methods for testing machine learning algorithms include receiving a dataset, receiving a selection of machine learning models, training and evaluating each machine learning model, aggregating results, and presenting results. Each machine learning model of the selection of machine learning models includes a machine learning algorithm and one or more associated parameter values. Training and evaluating each machine learning model includes producing a performance result for each machine learning model. Aggregating includes aggregating the performance results for all of the machine learning models to form performance comparison statistics. Presenting includes presenting the performance comparison statistics.

### BRIEF DESCRIPTION OF THE DRAWINGS

Fig. 1 is a representation of a machine learning system of the present disclosure.
Fig. 2 is a representation of modules within a machine learning system.
Fig. 3 is a representation of methods of the present disclosure.
Fig. 4 is a representation of methods of training and evaluating machine learning modules.

### DESCRIPTION

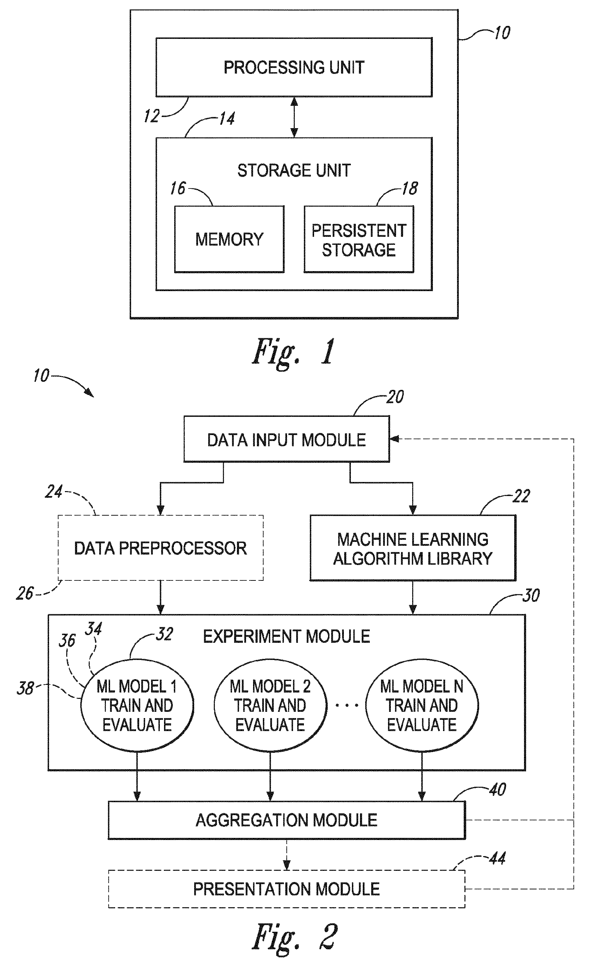

Figs. 1-4 illustrate systems and methods for machine learning. In general, in the drawings, elements that are likely to be included in a given embodiment are illustrated in solid lines, while elements that are optional or alternatives are illustrated in dashed lines. However, elements that are illustrated in solid lines are not essential to all embodiments of the present disclosure, and an element shown in solid lines may be omitted from a particular embodiment without departing from the scope of the present disclosure. Elements that serve a similar, or at least substantially similar, purpose are labeled with numbers consistent among the figures. Like numbers in each of the figures, and the corresponding elements, may not be discussed in detail herein with reference to each of the figures. Similarly, all elements may not be labeled or shown in each of the figures, but reference numerals associated therewith may be used for consistency. Elements, components, and/or features that are discussed with reference to one or more of the figures may be included in and/or used with any of the figures without departing from the scope of the present disclosure.

As illustrated in Fig. 1, a machine learning system 10 is a computerized system that includes a processing unit 12 operatively coupled to a storage unit 14. The processing unit 12 is one or more devices configured to execute instructions for software and/or firmware. The processing unit 12 may include one or more computer processors and may include a distributed group of computer processors. The storage unit 14 (also called a computer-readable storage unit) is one or more devices configured to store computer-readable information. The storage unit 14 may include a memory 16 (also called a computer-readable memory) and a persistent storage 18 (also called a computer-readable persistent storage, storage media, and/or computer-readable storage media). The persistent storage 18 is one or more computer-readable storage devices that are non-transitory and not merely transitory electronic and/or electromagnetic signals. The persistent storage 18 may include one or more (non-transitory) storage media and/or a distributed group of (non-transitory) storage media. The machine learning system 10 may include one or more computers, servers, workstations, etc., which each independently may be interconnected directly or indirectly (including by network connection). Thus, the machine learning system 10 may include processors, memory 16, and/or persistent storage 18 that are located remotely from one another.

The machine learning system 10 may be programmed to perform, and/or may store instructions to perform, the methods described herein. The storage unit 14 of the machine learning system 10 includes instructions that, when executed by the processing unit 12, cause the machine learning system 10 to perform one or more of the methods described herein.

The flowcharts and block diagrams described herein illustrate the architecture, functionality, and operation of possible implementations of systems, methods, and computer program products according to various illustrative embodiments. In this regard, each block in the flowcharts or block diagrams may represent a module, segment, or portion of code, which comprises one or more executable instructions for implementing the specified logical function or functions. It should also be noted that, in some alternative implementations, the functions noted in a block may occur out of the order noted in the drawings. For example, the functions of two blocks shown in succession may be executed substantially concurrently, or the functions of the blocks may sometimes be executed in the reverse order, depending upon the functionality involved.

As schematically represented in Fig. 2, machine learning systems 10 may include several modules (e.g., instructions and/or data stored in the storage unit 14 and configured to be executed by the processing unit 12). These modules (which also may be referred to as agents, programs, processes, and/or procedures) may include a data input module 20, a machine learning algorithm library 22, a data preprocessor 24, an experiment module 30, an aggregation module 40, and a presentation module 44.

Machine learning systems 10 are configured for machine learning model selection, i.e., to facilitate the choice of appropriate machine learning model(s) 32 for a particular data analysis problem, e.g., to compare candidate machine learning models. Generally, machine learning systems 10 are configured to calculate and/or to estimate the performance of one or more machine learning algorithms configured with one or more specific parameters (also referred to as hyper-parameters) with respect to a given set of data. The machine learning algorithm along with its associated specific parameter values form, at least in part, the machine learning model 32 (also referred to as a specific machine learning model and a candidate machine learning model, and, in Fig. 2, as ML Model 1 to ML Model N).

Data analysis problems may be classification problems or regression problems. Data analysis problems may relate to time-dependent data, which may be called sequence data, time-series data, temporal data, and/or time-stamped data. Time-dependent data relate to the progression of an observable (also called a quantity, an attribute, a property, or a feature) in a sequence and/or through time (e.g., measured in successive periods of time). For example, time-dependent data may relate to the operational health of equipment such as aircraft and their subsystems (e.g., propulsion system, flight control system, environmental control system, electrical system, etc.). Related observables may be measurements of the state of, the inputs to, and/or the outputs of electrical, optical, mechanical, hydraulic, fluidic, pneumatic, and/or aerodynamic components.

Data input module 20 is configured to receive a selection, e.g., a selection from a user, of machine learning models 32 and a dataset, such as a time-dependent dataset. Thus, machine learning systems 10 are configured to receive the dataset. The dataset, also called the input dataset, may be in a common format to interface with the machine learning models 32 and/or the experiment module 30. If the input dataset is not in a format compatible with the interface to the machine learning models 32 and/or the experiment module 30, the data input module 20 and/or the data preprocessor 24 may be configured to reformat the input dataset into a common format to interface with the machine learning modules 32 and/or the experiment module 30, or may otherwise convert the format of the input dataset to a compatible format.

The machine learning models 32 include a machine learning algorithm and one or more associated parameter values for the machine learning algorithm. The dataset includes data for one or more observables (e.g., a voltage measurement and a temperature measurement). The dataset may be a labeled dataset (also called an annotated dataset, a learning dataset, or a classified dataset), meaning that the dataset includes input data (e.g., values of observables, also called the raw data) and known output data for a sufficient number (optionally all) of the input data. Thus, a labeled dataset is configured for supervised learning (also called guided learning).

Machine learning algorithm library 22 includes a plurality of machine learning algorithms. The machine learning algorithms each are configured to conform to a common interface, also called an interchange interface, to facilitate application of the machine learning algorithms (e.g., to facilitate testing, training, evaluation, and/or deployment). The common interface may define common inputs and/or outputs, common methods for inputting and/or outputting data, and/or common procedure calls for each machine learning algorithm. For example, the machine learning algorithms may be configured to operate on datasets with a common format (e.g., organized in a particular file type, organized with particular row and/or column designations), to expose and/or to receive parameter values in the same manner, and/or to perform similar functions. Hence, any of the machine learning algorithms of the machine learning algorithm library 22 may be used in a similar manner (data may be transferred to the algorithms similarly, functions may be called similarly) and/or interchangeably. Further, the machine learning algorithm library 22 may be extensible, i.e., new algorithms may be added as available and as developed.

Each machine learning algorithm of the machine learning algorithm library 22 may accept specific parameters to tailor or to specify the particular variation of the algorithm applied. For example, an artificial neural network may include parameters specifying the number of nodes, the cost function, the learning rate, the learning rate decay, and the maximum iterations. Learned decision trees may include parameters specifying the number of trees (for ensembles or random forests) and the number of tries (i.e., the number of features/predictions to try at each branch). Support vector machines may include parameters specifying the kernel type and kernel parameters. Not all machine learning algorithms have associated parameters. As used herein, a machine learning model 32 is the combination of at least a machine learning algorithm and its associated parameter(s), if any. Thus, the selection of machine learning models 32 for the data input module 20 may be a (user) selection of machine learning algorithms and their associated parameter(s). The machine learning algorithms of the selection of machine learning models may be selected from the machine learning algorithm library 22. The machine learning algorithms may be a naïve Bayes classifier, a tree-augmented naïve Bayes classifier, a dynamic Bayesian network, a support vector machine, a learned decision tree, an ensemble of learned decision trees (e.g., random forests of learned decision trees), an artificial neural network, and combinations thereof.

Machine learning model 32 may be a macro-procedure 36 that combines the outcomes of an ensemble of micro-procedures 38. Each micro-procedure 38 includes a machine learning algorithm and its associated parameter values. Optionally, each micro-procedure 38 includes a different combination of machine learning algorithm and associated parameter values. Micro-procedures 38 may be configured in the same manner, and/or include the same features, as described with respect to machine learning models 32. For example, micro-procedures 38 may include a naïve Bayes classifier, a tree-augmented naïve Bayes classifier, a dynamic Bayesian network, a support vector machine, a learned decision tree, an ensemble of learned decision trees, and/or an artificial neural network.

Macro-procedures 36 are configured to provide the same base input data (i.e., at least a subset and/or derivative of the input data) to all micro-procedures 38 of the ensemble of micro-procedures 38. Training the macro-procedure 36 includes training each micro-procedure 38 (with the same base input data). One or more, optionally all, micro-procedures 38 may be trained with the same input feature data. Additionally or alternatively, two or more, optionally all, micro-procedures 38 may be trained with different input feature data (but all of the input feature data is a subset and/or derivative of the input data).

Though the individual, trained, micro-procedures 38 may be reliable, robust, and/or stable in predicting output data (the outcome), the combination of the micro-procedure outcomes may be more reliable, robust, and/or stable than any individual outcome. Thus, the macro-procedure 36 may be configured to combine the outcomes of the micro-procedures 38 to produce a combined outcome that is more reliable, robust, and/or stable than the individual micro-procedure 38 outcomes.

Macro-procedures 36 may include a machine learning algorithm and associated parameter values that are independent and/or distinct from the micro-procedures 38. Additionally or alternatively, macro-procedures 36 may combine the outcomes of the ensemble of micro-procedures 38 by cumulative value, maximum value, minimum value, median value, average value, mode value, most common value, and/or majority vote. Examples of macro-procedures 36 include an ensemble of learned decision trees (e.g., a random forest) and an ensemble of related classifiers (e.g., classifiers trained to predict outcomes at different times in the future). An example of an ensemble of related classifiers is disclosed in U.S. Patent Application No. 14/613,015, filed February 3, 2015, and entitled "Predictive Aircraft Maintenance Systems and Methods Incorporating Classifier Ensembles," the disclosure of which is herein incorporated by reference for all purposes.

Machine learning systems 10 may include data preprocessor 24, also referred to as an initial data preprocessor and a global preprocessor. Data preprocessor 24 is configured to prepare the input dataset for processing by the experiment module 30. The input to the data preprocessor 24 includes the input dataset provided by the data input module 20. Data preprocessor 24 may apply one or more preprocessing algorithms to the input dataset. For example, the data preprocessor 24 may be configured to discretize, to apply independent component analysis to, to apply principal component analysis to, to eliminate missing data from (e.g., to remove records and/or to estimate data), to select features from, and/or to extract features from the dataset. Some machine learning models 32 may perform more reliably and/or resiliently (e.g., with enhanced generalization and/or less dependence on the training data) if the dataset is preprocessed. Training of some machine learning models 32 may be enhanced (e.g., faster, less overfit) if the dataset is preprocessed. Data preprocessor 24 applies the same preprocessing to the dataset and the processed dataset is delivered to the experiment module 30 to be used by all machine learning models 32 under test. The input data after the optional data preprocessor 24 (e.g., the input dataset or the input dataset as optionally preprocessed by one or more preprocessing algorithms) may be referred to as input feature data and/or the input feature dataset. The input feature data is provided by the data preprocessor 24 to the experiment module 30.

Data preprocessor 24 may select the preprocessing algorithm(s) from a preprocessing algorithm library 26 that includes a plurality of preprocessing algorithms. The preprocessing algorithms of the preprocessing library 26 each are configured to conform to a common interface, also called an interchange interface, to facilitate application of the preprocessing algorithms. The common interface may define common inputs and/or outputs, common methods for inputting and/or outputting data, and/or common procedure calls for each preprocessing algorithm. For example, the preprocessing algorithms may be configured to operate on datasets with a common format (e.g., organized in a particular file type, organized with particular row and/or column designations), to expose and/or to receive parameter values in the same manner, and/or to perform similar functions. Hence, any of the preprocessing algorithms of the preprocessing algorithm library 26 may be used in a similar manner (data may be transferred to the algorithms similarly, functions may be called similarly) and/or interchangeably. Further, the preprocessing algorithm library 26 may be extensible, i.e., new algorithms may be added as available and as developed.

Discretization is a common task of data preprocessor 24 and a class of algorithms that may be present in the preprocessing algorithm library 26. Discretization, also called binning, is the process of converting and/or partitioning numeric observables (e.g., continuous input values) into discretized, binned, and/or nominal class values. For example, continuous values may be discretized into a set of intervals, with each continuous value classified as one interval of the set of intervals. Discretization of continuous data typically results in a discretization error and different algorithms are configured to reduce the amount of discretization error. Generally, discretization algorithms separate the input data based upon the statistical independence of the bins (e.g., χ² related methods such as Ameva, Chi2, ChiMerge, etc.) and/or the information entropy of the bins (e.g., methods such as MDLP (minimum descriptor length principle), CAIM (class-attribute interdependence maximization), and CACC (class-attribute contingency coefficient)).

Feature selection and feature extraction are other common tasks of data preprocessor 24 and a class of algorithms that may be present in the preprocessing algorithm library 26. Feature selection generally selects a subset of the input data values. Feature extraction, which also may be referred to as dimensionality reduction, generally transforms one or more input data values into a new data value. Feature selection and feature extraction may be combined into a single algorithm. Feature selection and/or feature extraction may preprocess the input data to simplify training, to remove redundant or irrelevant data, to identify important features (and/or input data), and/or to identify feature (and/or input data) relationships.

Feature extraction may include determining a statistic of the input feature data. Where the dataset is a time-dependent dataset, the statistic may be related to the time-dependence of the dataset, e.g., the statistic may be a statistic during a time window, i.e., during a period of time and/or at one or more specified times. Additionally or alternatively, the statistic may be related to one or more input feature data values. For example, the statistic may be a time average of a sensor value and/or a difference between two sensor values (e.g., measured at different times and/or different locations). More generally, statistics may include, and/or may be, a minimum, a maximum, an average, a variance, a deviation, a cumulative value, a rate of change, an average rate of change, a sum, a difference, a ratio, a product, and/or a correlation. Statistics may include, and/or may be, a total number of data points, a maximum number of sequential data points, a minimum number of sequential data points, an average number of sequential data points, an aggregate time, a maximum time, a minimum time, and/or an average time that the input feature data values are above, below, or about equal to a threshold value.

Additionally or alternatively, feature selection and/or feature extraction may include selecting, extracting, and/or processing input feature data values within certain constraints. For example, observable values may be selected, extracted, and/or processed only if within a predetermined range (e.g., outlier data may be excluded) and/or if other observable values are within a predetermined range (e.g., one sensor value may qualify the acceptance of another sensor value).

Experiment module 30 of the machine learning system 10 is configured to test (e.g., to train and evaluate) each of the machine learning models 32 of the selection of machine learning models 32 provided by the data input module 20 to produce a performance result for each machine learning model 32. For each of the machine learning models 32, experiment module 30 is configured to perform supervised learning using the same dataset (the input feature dataset, received from the data input module 20 and/or the data preprocessor 24, and/or data derived from the input feature dataset). Thus, each of the machine learning models 32 may be trained with the same information to facilitate comparison of the machine learning models 32.

Experiment module 30 may be configured to automatically and/or autonomously design and carry out the specified experiments (also called trials) to test each of the machine learning models 32. Automatic and/or autonomous design of experiments may include determining the order of machine learning models 32 to test and/or which machine learning models 32 to test. For example, the selection of machine learning models 32 received by the data input module 20 may include specific machine learning algorithms and a range and/or a set of one or more associated parameters to test. The experiment module 30 may apply these range(s) and/or set(s) to identify a group of machine learning models 32. That is, the experiment module 30 may generate a machine learning model 32 for each unique combination of parameters specified by the selection. Where the selection includes a range, the experiment module 30 may generate a set of values which sample the range (e.g., which span the range). As an example, the selection of machine learning models 32 may identify an artificial neural network as (one of) the machine learning algorithm(s) and associated parameters as 10-20 nodes and a learning rate decay of 0 or 0.01. The experiment module 30 may interpret this selection as at least four machine learning models: an artificial neural network with 10 nodes and a learning rate decay of 0, an artificial neural network with 10 nodes and a learning rate decay of 0.01, an artificial neural network with 20 nodes and a learning rate decay of 0, and an artificial neural network with 20 nodes and a learning rate decay of 0.01.

Generally, each machine learning model 32 used in the experiment module 30 is independent and may be tested independently. Hence, the experiment module 30 may be configured to test one or more machine learning models 32 in parallel (e.g., at least partially concurrently).

Experiment module 30 may be configured, optionally for each machine learning model 32 independently, to divide the dataset into a training dataset (a subset of the dataset) and an evaluation dataset (another subset of the dataset). The same training dataset and evaluation dataset may be used for one or more, optionally all, of the machine learning models 32. Additionally or alternatively, each machine learning model 32 may be tested (optionally exclusively) with an independent division of the dataset (which may or may not be a unique division for each machine learning model). The experiment module 30 may be configured to train the machine learning model(s) 32 with the respective training dataset(s) (to produce a trained model) and to evaluate the machine learning model(s) 32 with the respective evaluation dataset(s). Hence, to avoid bias in the training process, the training dataset and the evaluation dataset may be independent, sharing no input data and/or values related to the same input data. The training dataset and the evaluation dataset may be complementary subsets of the dataset input to the experiment module 30 (e.g., as optionally processed by the data preprocessor 24), i.e., the union of the training dataset and the evaluation dataset is the whole dataset. Generally, the training dataset and the evaluation dataset are identically and independently distributed, i.e., the training dataset and the evaluation dataset have no overlap of data and show substantially the same statistical distribution.

The experiment module 30 may be configured to preprocess the dataset (e.g., with an optional model preprocessor 34) before and/or after dividing the dataset, and may be configured to preprocess the training dataset and the evaluation dataset independently. The experiment module 30 and/or the machine learning system 10 may include a model preprocessor 34 configured to preprocess the data (the input feature data) input to each machine learning model 32. The experiment module 30 and/or the model preprocessor 34 may be configured to preprocess the data input to each machine learning model 32 independently. Model preprocessor 34 may be configured in the same manner, and/or include the same features, as described with respect to data preprocessor 24. For example, model preprocessor 34 may apply one or more preprocessing algorithms to the input feature data and the preprocessing algorithms may be selected from the preprocessing algorithm library 26.

Some preprocessing steps may be inappropriate to apply prior to dividing the dataset because the preprocessing may bias the training dataset (i.e., the training dataset could include information derived from the evaluation dataset). For example, unsupervised discretization (which does not rely on a labeled dataset) may group the data according to a predetermined algorithm, independent of the particular input data values and/or without knowledge of any output data, while supervised discretization (which does rely on a labeled dataset) may group the data according to patterns in the data (input data and/or known output data). Unsupervised discretization that is independent of the particular input data values may be performed before and/or after dividing the dataset. To avoid potential bias in the training dataset, supervised discretization, in particular discretization that is dependent on the particular input data values, may be performed after dividing the dataset (e.g., independently on the training dataset and the evaluation dataset).

Where the model preprocessor 34 is configured to preprocess the data after dividing the dataset into the training dataset and the evaluation dataset, the model preprocessor 34 may be configured to preprocess the training dataset and the evaluation dataset independently and/or to preprocess the evaluation dataset in the same manner as the training dataset (e.g., with the same preprocessing scheme that results from preprocessing the training dataset). For example, an unsupervised discretization may arrange the data into groups based on the training dataset. The same groups may be applied to the evaluation dataset.

Experiment module 30 is configured to train each of the machine learning models 32 using supervised learning to produce a trained model for each machine learning model. Experiment module 30 is configured to evaluate and/or to validate each trained model to produce a performance result for each machine learning model. Evaluation and/or validation may be performed by applying the trained model to the respective evaluation dataset and comparing the trained model results to the known output values. For machine learning models 32 which are macro-procedures 36, the experiment module 30 may be configured to generate a trained macro-procedure by independently training each micro-procedure 38 of the macro-procedure 36 to produce an ensemble of trained micro-procedures and, if the macro-procedure 36 itself includes a machine learning algorithm, training the macro-procedure 36 with the ensemble of trained micro-procedures 38. For macro-procedures 36, the experiment module is configured to evaluate and/or validate the trained macro-procedure by applying the trained macro-procedure to the respective evaluation dataset and comparing the trained macro-procedure results to the known output values.

Evaluation and/or validation may be performed by cross validation (multiple rounds of validation), e.g., leave-one-out cross validation, and/or k-fold cross validation. Cross validation is a process in which the original dataset is divided multiple times (to form multiple training datasets and corresponding evaluation datasets), the machine learning model 32 is trained and evaluated with each division (each training dataset and corresponding evaluation dataset) to produce an evaluation result for each division, and the evaluation results are combined to produce the performance result. For example, in k-fold cross validation, the original dataset may be divided into k chunks. For each round of validation, one of the chunks is the evaluation dataset and the remaining chunks are the training dataset. For each round of validation, which chunk is the evaluation dataset is changed. In leave-one-out cross validation, each instance to be evaluated by the model is its own chunk. Hence, leave-one-out cross validation is the case of k-fold cross validation where k is the number of data points (each data point is a tuple of features). The combination of the evaluation results to produce the performance result may be by averaging the evaluation results, accumulating the evaluation results, and/or other statistical combinations of the evaluation results.

The performance result for each machine learning model 32 and/or the individual evaluation results for each round of validation may include an indicator, value, and/or result related to a correlation coefficient, a mean square error, a confidence interval, an accuracy, a number of true positives, a number of true negatives, a number of false positives, a number of false negatives, a sensitivity, a positive predictive value, a specificity, a negative predictive value, a false positive rate, a false discovery rate, a false negative rate, and/or a false omission rate. Additionally or alternatively, the indicator, value, and/or result may be related to computational efficiency, memory required, and/or execution speed. The performance result for each machine learning model 32 may include at least one indicator, value, and/or result of the same type (e.g., all performance results include an accuracy). The performance result for each machine learning model 32 may include different types of indicators, values, and/or results (e.g., one performance result may include a confidence interval and one performance result may include a false positive rate).

For two-class classification schemes (e.g., binary values, positive-negative, true-false, yes-no, etc.), a true positive is a 'positive' result from the trained model when the known output value is likewise 'positive' (e.g., a 'yes' result and a 'yes' value). True positive rate, also called the sensitivity and/or the recall, is the total number of true positives divided by the total number of 'positive' output values. Positive predictive value, also called the precision, is the total number of true positives divided by the total number of 'positive' results. A true negative is a 'negative' result from the trained model when the known output value is likewise 'negative.' True negative rate, also called the specificity, is the total number of true negatives divided by the total number of 'negative' output values. Negative predictive value is the total number of true negatives divided by the total number of 'negative' results. A false positive (also called a type I error) is a 'positive' result from the trained model when the known output value is 'negative.' False positive rate, also called the fall-out, is the total number of false positives divided by the total number of 'negative' output values. False discovery rate is the total number of false positives divided by the total number of 'positive' results. A false negative (type II error) is a 'negative' result from the trained model when the known output value is 'positive.' False negative rate is the total number of false negatives divided by the total number of 'positive' output values. False omission rate is the total number of false negatives divided by the total number of 'negative' results.

For two-class classification schemes, accuracy is the total number of true positives and true negatives divided by the total population. For regression problems, accuracy may be an error measure such as mean square error.

Aggregation module 40 of machine learning system 10 is configured to aggregate and/or accumulate the performance results for all of the machine learning models to form performance comparison statistics. The performance comparison statistics may be selected, configured, and/or arranged to facilitate comparison of all of the machine learning models 32. The aggregation module 40 may be configured to accumulate and/or to aggregate the performance results for each of the machine learning models. The performance comparison statistics may include one or more indicators, values, and/or results of each of the performance results corresponding to the machine learning models 32. The performance comparison statistics may include at least one indicator, value, and/or result of the same type for each machine learning model 32 (e.g., the performance comparison statistics include an accuracy for each machine learning model 32). The performance comparison statistics may include different types of indicators, values, and/or results for each machine learning model 32 (e.g., the performance comparison statistics include a confidence interval for one machine learning model 32 and a false positive rate for another machine learning model 32).

Machine learning systems 10 may include an optional presentation module 44 that is configured to present the performance comparison statistics to an operator and/or a user of the machine learning system 10. The presentation module 44 may be configured to present the performance results for all of the machine learning models in a unified format to facilitate comparison of the machine learning models 32. The presentation module 44 may be configured to display the performance comparison statistics by visual, audio, and/or tactile display. Displays may include an alphanumeric display, a video monitor, a lamp, an LED, a speaker, a buzzer, a spring, and/or a weight. Additionally or alternatively, presentation module 44 may store a file including the performance comparison statistics in the persistent storage 18 and/or transmit a data block including the performance comparison statistics to the storage unit 14 and/or a user.

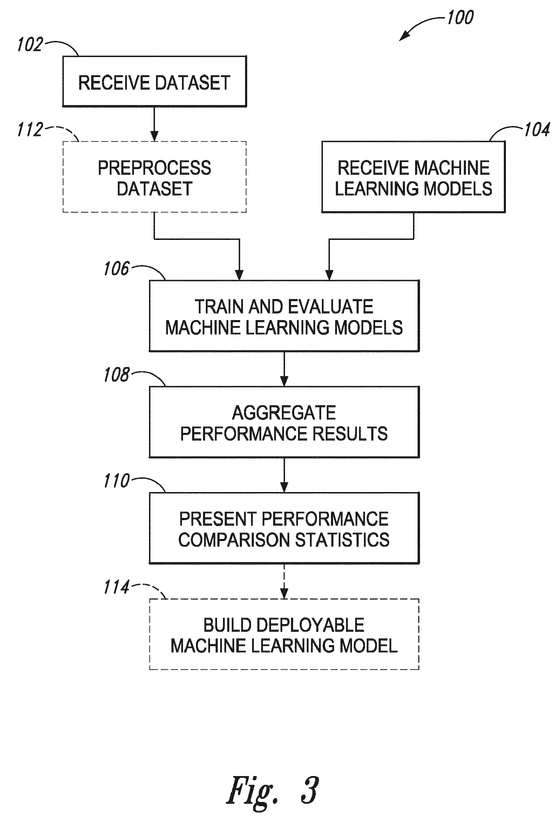

Fig. 3 schematically illustrates methods 100 to test machine learning algorithms with data such as time-series data. Methods 100 include receiving 102 a dataset (such as a time-dependent dataset), receiving 104 machine learning models (such as machine learning models 32), training and evaluating 106 each machine learning model to produce a performance result for each machine learning model, aggregating 108 the performance results for all of the machine learning models to form performance comparison statistics, and presenting 110 the performance comparison statistics (e.g., to a user).

Methods 100 may include operating and/or utilizing the machine learning system 10. Receiving 102 the dataset may include operating and/or utilizing the data input module 20. Receiving 104 the machine learning models may include operating and/or utilizing the data input module 20 and/or the machine learning algorithm library 22. Training and evaluating 106 may include operating and/or utilizing the experiment module 30. Aggregating 108 may include operating and/or utilizing the aggregation module 40. Presenting 110 may include operating and/or utilizing the presentation module 44.

Methods 100 may include preprocessing 112 the dataset (also referred to as global preprocessing), which may include operating and/or utilizing the data preprocessor 24 and/or the preprocessing algorithm library 26. Preprocessing 112 may include discretization, independent component analysis, principal component analysis, elimination of missing data, feature selection, and/or feature extraction.

Training and evaluating 106 includes using the same input dataset, as received by the receiving 102 and/or modified by the preprocessing 112, i.e., the input feature dataset, to produce a performance result for each machine learning model. Training and evaluating 106 may include using a subset and/or derivative of the input feature dataset and each machine learning model may be trained and evaluated with the same or different subsets and/or derivatives of the input feature dataset. Training and evaluating 106 generally includes performing supervised learning with at least a subset and/or a derivative of the input feature dataset for each machine learning algorithm. Training and evaluating 106 with the same information for each machine learning model may facilitate comparison of the selection of machine learning models.

Training and evaluating 106 may include designing and carrying out (performing) experiments (trials) to test each of the machine learning models of the selection of machine learning models. Training and evaluating 106 may include determining the order of machine learning models to test and/or which machine learning models to test, as discussed with respect to the experiment module 30 (Fig. 2).

Training and evaluating 106 may include designing experiments to be performed independently and/or in parallel (e.g., at least partially concurrently). Training and evaluating 106 may include performing one or more experiments (training and/or evaluating a machine learning model) in parallel (e.g., at least partially concurrently).

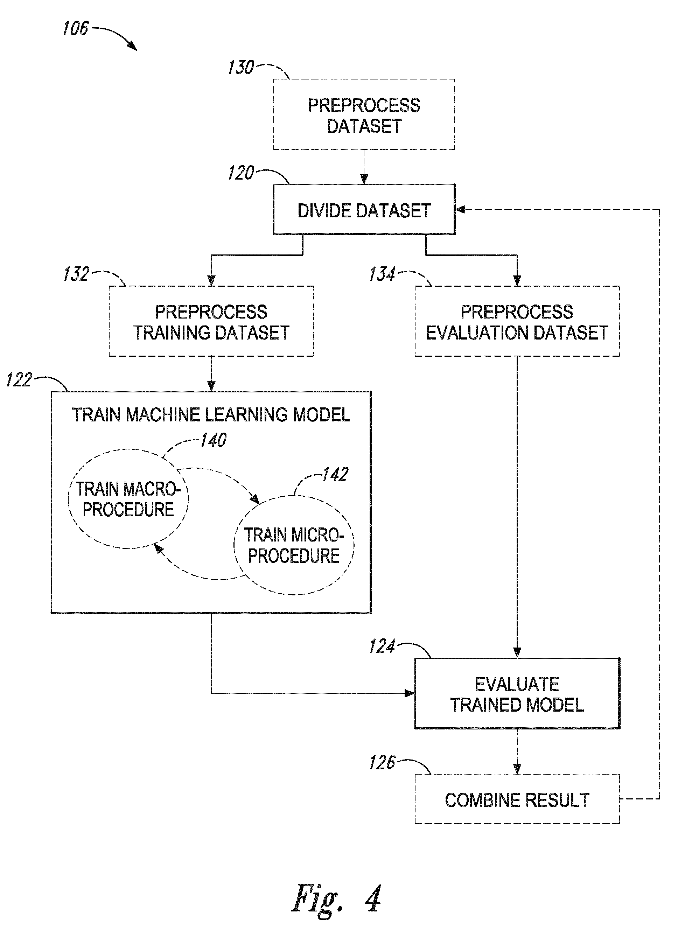

As detailed in Fig. 4, training and evaluating 106 may include dividing 120 the dataset into a training dataset and a corresponding evaluation dataset for each machine learning model, training 122 the machine learning model with the training dataset and evaluating 124 the trained model with the evaluation dataset. Further, training and evaluating 106 may include, for each machine learning model, preprocessing 130 the dataset (before dividing 120 the dataset) and/or preprocessing 132 the training dataset, preprocessing 134 the evaluation dataset. Each of preprocessing 130, preprocessing 132, and preprocessing 134 may independently include discretization, independent component analysis, principal component analysis, elimination of missing data, feature selection, and/or feature extraction with the respective dataset. Preprocessing 134 the evaluation dataset may be independent of or dependent on (e.g., share the same preprocessing scheme with) the preprocessing 132 the training dataset. For example, preprocessing 134 may apply the same group categories to the evaluation dataset as resulted from preprocessing 132 the training dataset.

Dividing 120 may be performed independently for at least one (optionally each) machine learning model. Additionally or alternatively, dividing 120 may be performed to produce the same training dataset and the same corresponding evaluation dataset for one or more (optionally all) machine learning models. As discussed with respect to the experiment module 30, the training dataset and the evaluation dataset may be independent, sharing no input data and/or values related to the same input data (e.g., to avoid bias in the training process). The training dataset and the evaluation dataset may be complementary subsets of the input feature dataset and may be identically and independently distributed, i.e., the training dataset and the evaluation dataset have no overlap of data and show substantially the same statistical distribution.

Training 122 includes training each machine learning model (such as machine learning model 32) with a training dataset to produce a trained model for each machine learning model. Where a machine learning model is a macro-procedure (such as macro-procedure 36), training 122 also includes training 140 the macro-procedure and training 142 the micro-procedures (such as micro-procedures 38) of the macro-procedure. Training 140 the macro-procedure includes independently training 142 each micro-procedure of the macro-procedure to produce an ensemble of trained micro-procedures and, if the macro-procedure itself includes a machine learning algorithm, training the macro-procedure with the ensemble of trained micro-procedures. If no machine learning model is a macro-procedure, training 122 does not include training 140 or training 142.

Evaluating 124 includes evaluating each trained model with the corresponding evaluation dataset, e.g., as discussed with respect to experiment module 30. The trained model is applied to the evaluation dataset to produce a result (a prediction) for each of the input values of the evaluation dataset and the results are compared to the known output values of the evaluation dataset. The comparison may be referred to as an evaluation result and/or a performance result.

Training and evaluating 106 may include validation and/or cross validation (multiple rounds of validation), e.g., leave-one-out cross validation, and/or k-fold cross validation, as discussed with respect to experiment module 30. Training and evaluating 106 may include repeatedly dividing 120 the dataset to perform multiple rounds of training 122 and evaluation 124 (i.e., rounds of validation) and combining 126 the (evaluation) results of the multiple rounds of training 122 and evaluation 124 to produce the performance result for each machine learning model. Combining 126 the evaluation results to produce the performance result may be by averaging the evaluation results, accumulating the evaluation results, and/or other statistical combinations of the evaluation results.

The evaluation results of individual rounds of validation and the performance results for each machine learning model are as described with respect to the experiment module 30.

Returning to Fig. 3, aggregating 108 may include accumulating the performance results for each of the machine learning models to form the performance comparison statistics. The performance comparison statistics may be selected, configured, and/or arranged to facilitate comparison of all of the machine learning models. Aggregating may include accumulating and/or aggregating the performance results for each of the machine learning models. The performance comparison statistics are as described with respect to the aggregation module 40.

Presenting 110 includes presenting the performance comparison statistics e.g., to an operator and/or a user. Presenting 110 may include presenting the performance results for all of the machine learning models in a unified format to facilitate comparison of the machine learning models. Presenting 110 may include displaying the performance comparison statistics by visual, audio, and/or tactile display. Additionally or alternatively, presenting 110 may include storing a file including the performance comparison statistics (e.g., in the persistent storage 18) and/or transmitting a data block including the performance comparison statistics (e.g., to the storage unit 14 and/or a user).

Methods 100 may include building 114 a deployable machine learning model corresponding to one or more of the machine learning models. Building 114 a deployable machine learning model includes training the corresponding machine learning model with the entire input feature dataset (as optionally preprocessed). Thus, the deployable machine learning model is trained with all available data rather than just a subset (the training dataset). Building 114 may be performed after comparing the machine learning models with the performance comparison statistics and selecting one or more of the machine learning models to deploy.

Examples of inventive subject matter according to the present disclosure are described in the following enumerated paragraphs.
A1. A computerized method for testing machine learning algorithms with input data, the method comprising:
   receiving an input dataset;
   receiving a selection of machine learning models, wherein each machine learning model includes a machine learning algorithm and one or more associated parameter values;
   training and evaluating each machine learning model to produce a performance result for each machine learning model;
   aggregating the performance results for all of the machine learning models to form performance comparison statistics; and
   presenting the performance comparison statistics.
A2. The method of paragraph A1, wherein the input dataset is at least one of a time-dependent dataset, a time-series dataset, a time-stamped dataset, a sequential dataset, and a temporal dataset.
A3. The method of any of paragraphs A1-A2, wherein the input dataset includes a series of values of an observable measured in successive periods of time.
A4. The method of any of paragraphs A1-A3, wherein the input dataset is a labeled dataset.
A5. The method of any of paragraphs A1-A4, further comprising, before the training and evaluating, global preprocessing the input dataset, and optionally wherein the global preprocessing includes at least one of discretization, independent component analysis, principal component analysis, elimination of missing data, feature selection, and feature extraction.
A5.1. The method of paragraph A5, wherein the global preprocessing includes extracting a feature by at least determining a statistic of feature data during a time window.
A5.1.1. The method of paragraph A5.1, wherein the statistic includes, optionally is, at least one of a minimum, a maximum, an average, a variance, a deviation, a cumulative value, a rate of change, and an average rate of change.
A5.1.2. The method of any of paragraphs A5.1-A5.1.1, wherein the statistic includes, optionally is, at least one of a total number of data points, a maximum number of sequential data points, a minimum number of sequential data points, an average number of sequential data points, an aggregate time, a maximum time, a minimum time, and an average time that the feature data are above, below, or about equal to a threshold value.
A6. The method of any of paragraphs A1-A5.1.2, wherein at least one, optionally each, machine learning model includes at least one of a naïve Bayes classifier, a tree-augmented naïve Bayes classifier, a dynamic Bayesian network, a support vector machine, a learned decision tree, an ensemble of learned decision trees, and an artificial neural network.
A7. The method of any of paragraphs A1-A6, wherein at least one, optionally each, machine learning model is a macro-procedure that combines outcomes of an ensemble of micro-procedures, wherein each micro-procedure includes a machine learning algorithm and one or more associated parameter values.
A7.1. The method of paragraph A7, wherein at least one, optionally each, micro-procedure includes at least one of a naïve Bayes classifier, a tree-augmented naïve Bayes classifier, a dynamic Bayesian network, a support vector machine, a learned decision tree, an ensemble of learned decision trees, and an artificial neural network.
A7.2. The method of any of paragraphs A7-A7.1, wherein the macro-procedure is configured to combine the outcomes of the ensemble of micro-procedures by at least one of cumulative value, maximum value, minimum value, median value, average value, mode value, most common value, and majority vote.
A8. The method of any of paragraphs A1-A7.2, wherein the machine learning algorithms are selected from an extensible library of machine learning algorithms.
A9. The method of any of paragraphs A1-A8, wherein the training and evaluating includes, optionally for each machine learning model independently, dividing the input dataset into a training dataset and an evaluation dataset, and optionally wherein the training dataset and the evaluation dataset are complementary subsets of the input dataset.
A9.1. The method of paragraph A9, wherein the training and evaluating includes preprocessing the input dataset prior to the dividing, and optionally wherein the preprocessing the input dataset includes at least one of discretization, independent component analysis, principal component analysis, elimination of missing data, feature selection, and feature extraction.
A9.2. The method of any of paragraphs A9-A9.1, wherein the training and evaluating includes preprocessing the training dataset, and optionally wherein the preprocessing the training dataset includes at least one of discretization, independent component analysis, principal component analysis, elimination of missing data, feature selection, and feature extraction.
A9.2.1. The method of paragraph A9.2, wherein the preprocessing the training dataset includes generating a preprocessing scheme and wherein the training and evaluating includes preprocessing the evaluation dataset with the preprocessing scheme.
A9.3. The method of any of paragraphs A9-A9.2.1, wherein the training and evaluating includes preprocessing the evaluation dataset, and optionally wherein the preprocessing the evaluation dataset includes at least one of discretization, independent component analysis, principal component analysis, elimination of missing data, feature selection, and feature extraction.
A10. The method of any of paragraphs A1-A9.3, wherein the training and evaluating includes training each machine learning model with a training dataset that is a subset of the input dataset to produce a trained model for each machine learning model.
A10.1. The method of paragraph A10, wherein the training and evaluating includes evaluating each trained model with an evaluation dataset that is a subset of the input dataset to produce the performance result for each machine learning model, and optionally wherein the evaluation dataset and the training dataset are complementary subsets of the input dataset.
A11. The method of any of paragraphs A1-A10.1, wherein the training and evaluating includes cross validating each machine learning model, optionally using k-fold cross validation.
A12. The method of any of paragraphs A1-A11, wherein the training and evaluating includes for each machine learning model, optionally for each machine learning model independently, dividing the input dataset into a training dataset and an evaluation dataset, training the machine learning model with the training dataset to produce a trained model, evaluating the machine learning model with the evaluation dataset to produce an evaluation result, and repeating the dividing, the training, and the evaluating by dividing the input dataset into a different training dataset and a different evaluation dataset.
A12.1. The method of paragraph A12, wherein the training and evaluating includes combining the evaluation results to produce the performance result, and optionally wherein the combining includes at least one of averaging the evaluation results and accumulating the evaluation results.
A13. The method of any of paragraphs A1-A12.1, wherein the training and evaluating includes using supervised learning.
A14. The method of any of paragraphs A1-A13, when also depending from paragraph A7 (relating to macro-procedures), wherein, for each macro-procedure, the training and evaluating includes generating a trained macro-procedure by independently training each micro-procedure to produce an ensemble of trained micro-procedures, and includes evaluating the trained macro-procedure, and optionally wherein the generating the trained macro-procedure includes training the macro-procedure with the ensemble of trained micro-procedures.
A15. The method of any of paragraphs A1-A14, wherein the performance result for at least one, optionally each, machine learning model includes an indicator related to at least one of a correlation coefficient, a mean square error, a confidence interval, a number of true positives, a number of true negatives, a number of false positives, a number of false negatives, an accuracy, a sensitivity, a positive predictive value, a specificity, a negative predictive value, a false positive rate, a false discovery rate, a false negative rate, and a false omission rate.
A16. The method of any of paragraphs A1-A15, wherein the aggregating includes accumulating the performance results for each of the machine learning models.
A17. The method of any of paragraphs A1-A16, wherein the performance comparison statistics include, for each machine learning model, an indicator related to at least one of a correlation coefficient, a mean square error, a confidence interval, an accuracy, a number of true positives, a number of true negatives, a number of false positives, a number of false negatives, a sensitivity, a positive predictive value, a specificity, a negative predictive value, a false positive rate, a false discovery rate, a false negative rate, and a false omission rate.
A18. The method of any of paragraphs A1-A17, wherein the presenting includes presenting the performance results for all of the machine learning models in a unified format to facilitate comparison of the machine learning models.
A19. The method of any of paragraphs A1-A18, wherein the presenting includes displaying the performance comparison statistics by at least one of visual, audio, and tactile display.
A20. A machine learning system comprising:
   a computer-readable storage unit; and
   a processing unit operatively coupled to the computer-readable storage unit;
   wherein the computer-readable storage unit includes instructions, that when executed by the processing unit, cause the machine learning system to perform the method of any of paragraphs A1-A19.

B1. A machine learning system to compare candidate machine learning algorithms for a particular data analysis problem, the machine learning system comprising:
   a machine learning algorithm library that includes a plurality of machine learning algorithms configured to be tested with a common interface;
   a data input module configured to receive an input dataset and a selection of machine learning models, wherein each machine learning model includes a machine learning algorithm from the machine learning algorithm library and one or more associated parameter values;
   an experiment module configured to train and evaluate each machine learning model to produce a performance result for each machine learning model; and
   an aggregation module configured to aggregate the performance results for all of the machine learning models to form performance comparison statistics.
B2. The machine learning system of paragraph B1, wherein the plurality of machine learning algorithms includes at least one algorithm selected from the group consisting of a naïve Bayes classifier, a tree-augmented naïve Bayes classifier, a dynamic Bayesian network, a support vector machine, a learned decision tree, an ensemble of learned decision trees, and an artificial neural network.
B3. The machine learning system of any of paragraphs B1-B2, wherein the common interface defines at least one of a common input, a common output, a common method for inputting data, a common method for outputting data, and a common procedure call for each machine learning algorithm of the machine learning algorithm library.
B4. The machine learning system of any of paragraphs B1-B3, wherein each of the machine learning algorithms of the machine learning algorithm library is configured to operate on datasets with a common format.
B5. The machine learning system of any of paragraphs B1-B4, wherein the machine learning algorithm library is an extensible library of machine learning algorithms.
B6. The machine learning system of any of paragraphs B1-B5, wherein the input dataset is at least one of a time-dependent dataset, a time-series dataset, a time-stamped dataset, a sequential dataset, and a temporal dataset.
B7. The machine learning system of any of paragraphs B1-B6, wherein the input dataset includes a series of values of an observable measured in successive periods of time.
B8. The machine learning system of any of paragraphs B1-B7, wherein the input dataset is a labeled dataset.
B9. The machine learning system of any of paragraphs B1-B8, further comprising a data preprocessor configured to prepare the input dataset for processing by the experiment module, wherein the data preprocessor is configured to at least one of discretize, apply independent component analysis to, apply principal component analysis to, eliminate missing data from, select features from, and extract features from the input dataset.
B9.1. The machine learning system of paragraph B9, wherein the data preprocessor is configured to extract a feature by at least determining a statistic of feature data during a time window.
B9.1.1. The machine learning system of paragraph B9.1, wherein the statistic includes, optionally is, at least one of a minimum, a maximum, an average, a variance, a deviation, a cumulative value, a rate of change, and an average rate of change.
B9.1.2. The machine learning system of any of paragraphs B9.1-B9.1.1, wherein the statistic includes, optionally is, at least one of a total number of data points, a maximum number of sequential data points, a minimum number of sequential data points, an average number of sequential data points, an aggregate time, a maximum time, a minimum time, and an average time that the feature data are above, below, or about equal to a threshold value.
B10. The machine learning system of any of paragraphs B1-B9.1.2, further comprising a preprocessing algorithm library that includes a plurality of preprocessing algorithms and optionally wherein the preprocessing algorithms conform to a common preprocessing interface.
B10.1. The machine learning system of any of paragraphs B1-B10, wherein the common preprocessing interface defines at least one of a common input, a common output, a common method for inputting data, a common method for outputting data, and a common procedure call for each preprocessing algorithm of the machine learning algorithm library.
B10.2. The machine learning system of any of paragraphs B1-B10.1, wherein each of the preprocessing algorithms of the preprocessing algorithm library is configured to operate on datasets with a common format.
B10.3. The machine learning system of any of paragraphs B1-B10.2, when also depending from paragraph B9 (relating to the data preprocessor), wherein the data preprocessor is configured to select a preprocessing algorithm from the preprocessing algorithm library.
B11. The machine learning system of any of paragraphs B1-B10.3, wherein at least one, optionally each, machine learning model includes at least one of a naïve Bayes classifier, a tree-augmented naïve Bayes classifier, a dynamic Bayesian network, a support vector machine, a learned decision tree, an ensemble of learned decision trees, and an artificial neural network.
B12. The machine learning system of any of paragraphs B1-B11, wherein at least one, optionally each, machine learning model is a macro-procedure that combines outcomes of an ensemble of micro-procedures, wherein each micro-procedure includes a machine learning algorithm and one or more associated parameter values.
B12.1. The machine learning system of paragraph B12, wherein at least one, optionally each, micro-procedure includes at least one of a naïve Bayes classifier, a tree-augmented naïve Bayes classifier, a dynamic Bayesian network, a support vector machine, a learned decision tree, an ensemble of learned decision trees, and an artificial neural network.
B12.2. The machine learning system of any of paragraphs B12-B12.1, wherein the macro-procedure is configured to combine the outcomes of the ensemble of micro-procedures by at least one of cumulative value, maximum value, minimum value, median value, average value, mode value, most common value, and majority vote.
B13. The machine learning system of any of paragraphs B1-B12.2, wherein the experiment module is configured, optionally for each machine learning model independently, to divide the input dataset into a training dataset and an evaluation dataset, and optionally wherein the training dataset and the evaluation dataset are complementary subsets of the input dataset.
B13.1. The machine learning system of paragraph B13, wherein the experiment module is configured to preprocess the input dataset prior to dividing the input dataset, and optionally wherein the preprocessing the input dataset includes at least one of discretization, independent component analysis, principal component analysis, elimination of missing data, feature selection, and feature extraction.
B13.2. The machine learning system of any of paragraphs B13-B13.1, wherein the experiment module is configured to preprocess the training dataset, optionally by at least one of discretization, independent component analysis, principal component analysis, elimination of missing data, feature selection, and feature extraction.
B13.2.1. The machine learning system of paragraph B13.2, wherein the experiment module is configured to preprocess the training dataset to result in a preprocessing scheme and wherein the experiment module is configured to preprocess the evaluation dataset with the preprocessing scheme.
B13.3. The machine learning system of any of paragraphs B13-B13.2.1, wherein the experiment module is configured to preprocess the evaluation dataset, optionally by at least one of discretization, independent component analysis, principal component analysis, elimination of missing data, feature selection, and feature extraction.
B14. The machine learning system of any of paragraphs B1-B13.3, wherein the experiment module is configured to train each machine learning model with a training dataset that is a subset of the input dataset to produce a trained model for each machine learning model.
B14.1. The machine learning system of paragraph B14, wherein the experiment module is configured to evaluate each trained model with an evaluation dataset that is a subset of the input dataset to produce the performance result for each machine learning model, and optionally wherein the evaluation dataset and the training dataset are complementary subsets of the input dataset.
B15. The machine learning system of any of paragraphs B1-B14.1, wherein the experiment module is configured to cross validate each machine learning model, optionally using k-fold cross validation.
B16. The machine learning system of any of paragraphs B1-B15, wherein the experiment module is configured, for each machine learning model, optionally for each machine learning model independently, to divide the input dataset into a training dataset and an evaluation dataset, to train the machine learning model with the training dataset to produce a trained model, and to evaluate the machine learning model with the evaluation dataset to produce the performance result.
B17. The machine learning system of any of paragraphs B1-B15, wherein the experiment module is configured, for each machine learning model, optionally for each machine learning model independently, to repeat, for different divisions of the input dataset, dividing the input dataset into a training dataset and an evaluation dataset, training the machine learning model with the training dataset to produce a trained model, evaluating the machine learning model with the evaluation dataset to produce an evaluation result, and to combine the evaluation results produced from the different divisions of the input dataset to produce the performance result, optionally by at least one of averaging the evaluation results and accumulating the evaluation results.
B18. The machine learning system of any of paragraphs B1-B17, wherein the experiment module is configured to perform supervised learning.
B19. The machine learning system of any of paragraphs B1-B18, when also depending from paragraph B12 (relating to macro-procedures), wherein, for each macro-procedure, the experiment module is configured to generate a trained macro-procedure by independently training each micro-procedure to produce an ensemble of trained micro-procedures, and is configured to evaluate the trained macro-procedure, and optionally wherein the experiment module is configured to generate the trained macro-procedure by training the macro-procedure with the ensemble of trained micro-procedures.
B20. The machine learning system of any of paragraphs B1-B19, wherein the performance result for at least one, optionally each, machine learning model includes an indicator related to at least one of a correlation coefficient, a mean square error, a confidence interval, a number of true positives, a number of true negatives, a number of false positives, a number of false negatives, an accuracy, a sensitivity, a positive predictive value, a specificity, a negative predictive value, a false positive rate, a false discovery rate, a false negative rate, and a false omission rate.
B21. The machine learning system of any of paragraphs B1-B20, wherein the aggregation module is configured to accumulate the performance results for each of the machine learning models.
B22. The machine learning system of any of paragraphs B1-B21, wherein the performance comparison statistics include, for each machine learning model, an indicator related to at least one of a correlation coefficient, a mean square error, a confidence interval, an accuracy, a number of true positives, a number of true negatives, a number of false positives, a number of false negatives, a sensitivity, a positive predictive value, a specificity, a negative predictive value, a false positive rate, a false discovery rate, a false negative rate, and a false omission rate.
B23. The machine learning system of any of paragraphs B1-B22, further comprising a presentation module configured to present the performance comparison statistics.
B23.1. The machine learning system of paragraph B23, wherein the presentation module is configured to present the performance results for all of the machine learning models in a unified format to facilitate comparison of the machine learning models.
B23.2. The machine learning system of any of paragraphs B23-B23.1, wherein the presentation module is configured to display the performance comparison statistics by at least one of visual, audio, and tactile display.
B24. The machine learning system of any of paragraphs B1-B23.2, further comprising:
   a computer-readable storage unit; and
   a processing unit operatively coupled to the computer-readable storage unit;
   wherein the computer-readable storage unit includes the machine learning algorithm library, the data input module, the experiment module, and the aggregation module.

As used herein, a user may be a person (e.g., an operator, etc.), a client device, and/or a client module, agent, program, process, and/or procedure. Thus, the machine learning system 10 may include user interface elements, script parsing elements, and/or may be dedicated to server operations.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function. Further, as used herein, the singular forms "a", "an" and "the" may be intended to include the plural forms as well, unless the context clearly indicates otherwise.

The various disclosed elements of systems and apparatuses, and steps of methods disclosed herein are not required of all systems, apparatuses and methods according to the present disclosure, and the present disclosure includes all novel and non-obvious combinations and subcombinations of the various elements and steps disclosed herein. Moreover, any of the various elements and steps, or any combination of the various elements and/or steps, disclosed herein may define independent inventive subject matter that is separate and apart from the whole of a disclosed system, apparatus, or method. Accordingly, such inventive subject matter is not required to be associated with the specific systems, apparatuses and methods that are expressly disclosed herein, and such inventive subject matter may find utility in systems and/or methods that are not expressly disclosed herein.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, the phrases "at least one of" and "one or more of," in reference to a list of more than one entity, means any one or more of the entities in the list of entities, and is not limited to at least one of each and every entity specifically listed within the list of entities. For example, "at least one of A and B" (or, equivalently, "at least one of A or B," or, equivalently, "at least one of A and/or B") may refer to A alone, B alone, or the combination of A and B.

Further, the disclosure comprises embodiments according to the following clauses:
Clause 1. A machine learning system to compare candidate machine learning algorithms for a particular data analysis problem, the machine learning system comprising:
   a machine learning algorithm library that includes a plurality of machine learning algorithms configured to be tested with a common interface;
   a data input module configured to receive a dataset and a selection of machine learning models, wherein each machine learning model includes a machine learning algorithm from the machine learning algorithm library and one or more associated parameter values;
   an experiment module configured to train and evaluate each machine learning model to produce a performance result for each machine learning model; and
   an aggregation module configured to aggregate the performance results for all of the machine learning models to form performance comparison statistics.
Clause 2. The machine learning system of Clause 1, wherein the common interface defines at least one of a common input, a common output, a common method for inputting data, a common method for outputting data, and a common procedure call for each machine learning algorithm of the machine learning algorithm library.
Clause 3. The machine learning system of Clauses 1 or 2, further comprising a data preprocessor configured to prepare the dataset for processing by the experiment module, wherein the data preprocessor is configured to at least one of discretize, apply independent component analysis to, apply principal component analysis to, eliminate missing data from, select features from, and extract features from the dataset.
Clause 4. The machine learning system of Clause 3, wherein the data preprocessor is configured to extract a feature by at least determining a statistic of feature data during a time window, wherein the statistic includes at least one of a minimum, a maximum, an average, a variance, a deviation, a cumulative value, a rate of change, and an average rate of change.
Clause 5. The machine learning system of Clauses 1, 2, 3 or 4, further comprising a preprocessing algorithm library that includes a plurality of preprocessing algorithms and wherein the preprocessing algorithms conform to a common preprocessing interface.
Clause 6. The machine learning system of Clauses 1, 2, 3, 4 or 5, wherein at least one machine learning model is a macro-procedure that combines outcomes of an ensemble of micro-procedures, wherein each micro-procedure includes a machine learning algorithm and one or more associated parameter values, wherein the macro-procedure is configured to combine the outcomes of the ensemble of micro-procedures by at least one of cumulative value, maximum value, minimum value, median value, average value, mode value, most common value, and majority vote.
Clause 7. The machine learning system of Clause 6, wherein, for each macro-procedure, the experiment module is configured to generate a trained macro-procedure by independently training each micro-procedure to produce an ensemble of trained micro-procedures, and the experiment module is configured to evaluate the trained macro-procedure.
Clause 8. The machine learning system of Clauses 1, 2, 3, 4, 5, 6 or 7, wherein the experiment module is configured to divide the dataset into a training dataset and an evaluation dataset, and wherein the training dataset and the evaluation dataset are complementary subsets of the dataset.
Clause 9. The machine learning system of Clause 8, wherein the experiment module is configured to preprocess the training dataset to result in a preprocessing scheme and wherein the experiment module is configured to preprocess the evaluation dataset with the preprocessing scheme.
Clause 10. The machine learning system of Clauses 1, 2, 3, 4, 5, 6, 7, 8 or 9, wherein the experiment module is configured to train each machine learning model with a training dataset that is a subset of the dataset to produce a trained model for each machine learning model, and wherein the experiment module is configured to evaluate each trained model with an evaluation dataset that is a subset of the dataset to produce the performance result for each machine learning model.
Clause 11. The machine learning system of Clauses 1, 2, 3, 4, 5, 6, 7, 8, 9 or 10, wherein the experiment module is configured to cross validate each machine learning model using at least one of leave-one-out cross validation and k-fold cross validation.
Clause 12. The machine learning system of Clauses 1, 2, 3, 4, 5, 6, 7, 8, 9, 10 or 11, further comprising a presentation module configured to present the performance comparison statistics, wherein the presentation module is configured to present the performance results for all of the machine learning models in a unified format to facilitate comparison of the machine learning models.
Clause 13. A computerized method for testing machine learning algorithms, the method comprising:
   receiving a dataset;
   receiving a selection of machine learning models, wherein each machine learning model includes a machine learning algorithm and one or more associated parameter values;
   training and evaluating each machine learning model to produce a performance result for each machine learning model;
   aggregating the performance results for all of the machine learning models to form performance comparison statistics; and
   presenting the performance comparison statistics.
Clause 14. The method of Clause 13, wherein the dataset is a time-series dataset that includes a series of values of an observable measured in successive periods of time.
Clause 15. The method of Clauses 13 or 14, further comprising, before the training and evaluating, global preprocessing the dataset, and wherein the global preprocessing includes at least one of discretization, independent component analysis, principal component analysis, elimination of missing data, feature selection, and feature extraction.
Clause 16. The method of Clause 15, wherein the global preprocessing includes extracting a feature by at least determining a statistic of feature data during a time window, and wherein the statistic includes at least one of a minimum, a maximum, an average, a variance, a deviation, a cumulative value, a rate of change, and an average rate of change.
Clause 17. The method of Clauses 13, 14, 15 or 16, wherein at least one machine learning model is a macro-procedure that combines outcomes of an ensemble of micro-procedures, wherein each micro-procedure includes a machine learning algorithm and one or more associated parameter values, and wherein the macro-procedure is configured to combine the outcomes of the ensemble of micro-procedures by at least one of cumulative value, maximum value, minimum value, median value, average value, mode value, most common value, and majority vote.
Clause 18. The method of Clauses 13, 14, 15, 16 or 17, wherein the training and evaluating includes dividing the dataset into a training dataset and an evaluation dataset, and wherein the training dataset and the evaluation dataset are complementary subsets of the dataset, wherein the training and evaluating includes preprocessing the training dataset to generate a preprocessing scheme and wherein the training and evaluating includes preprocessing the evaluation dataset with the preprocessing scheme.
Clause 19. The method of Clause 13, 14, 15, 16, 17 or 18, wherein the training and evaluating includes training each machine learning model with a training dataset that is a subset of the dataset to produce a trained model for each machine learning model, wherein the training and evaluating includes evaluating each trained model with an evaluation dataset that is a subset of the dataset to produce the performance result for each machine learning model, and wherein the evaluation dataset and the training dataset are complementary subsets of the dataset.
Clause 20. The method of Clauses 13, 14, 15, 16, 17, 18 or 19, wherein the training and evaluating includes, for each machine learning model, dividing the dataset into a training dataset and an evaluation dataset, training the machine learning model with the training dataset to produce a trained model, evaluating the machine learning model with the evaluation dataset to produce an evaluation result, and repeating the dividing, the training, and the evaluating by dividing the dataset into a different training dataset and a different evaluation dataset, wherein the training and evaluating includes combining the evaluation results to produce the performance result.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

## Claims

1. A machine learning system (10) to compare candidate machine learning algorithms for a particular data analysis problem, the machine learning system (10) comprising:
a machine learning algorithm library (22) that includes a plurality of machine learning algorithms configured to be tested with a common interface;
a data input module (20) configured to receive a dataset and a selection of machine learning models (32), wherein each machine learning model (32) includes a machine learning algorithm from the machine learning algorithm library (22) and one or more associated parameter values;
an experiment module (30) configured to train and evaluate each machine learning model (32) to produce a performance result for each machine learning model; and
an aggregation module (40) configured to aggregate the performance results for all of the machine learning models (32) to form performance comparison statistics.

2. The machine learning system (10) of claim 1, wherein the common interface defines at least one of a common input, a common output, a common method for inputting data, a common method for outputting data, and a common procedure call for each machine learning algorithm of the machine learning algorithm library (22).

3. The machine learning system (10) of claims 1 or 2, further comprising a data preprocessor (24) configured to prepare the dataset for processing by the experiment module (30), wherein the data preprocessor (24) is configured to at least one of discretize, apply independent component analysis to, apply principal component analysis to, eliminate missing data from, select features from, and extract features from the dataset.

4. The machine learning system (10) of claims 1, 2 or 3, further comprising a preprocessing algorithm library (26) that includes a plurality of preprocessing algorithms and wherein the preprocessing algorithms conform to a common preprocessing interface.

5. The machine learning system (10) of claims 1, 2, 3 or 4, wherein at least one machine learning model (32) is a macro-procedure (36) that combines outcomes of an ensemble of micro-procedures (38), wherein each micro-procedure (38) includes a machine learning algorithm and one or more associated parameter values, wherein the macro-procedure (36) is configured to combine the outcomes of the ensemble of micro-procedures (38) by at least one of cumulative value, maximum value, minimum value, median value, average value, mode value, most common value, and majority vote.

6. The machine learning system (10) of claims 1, 2, 3, 4 or 5, wherein the experiment module (30) is configured to divide the dataset into a training dataset and an evaluation dataset, and wherein the training dataset and the evaluation dataset are complementary subsets of the dataset.

7. The machine learning system (10) of claims 1, 2, 3, 4, 5 or 6, wherein the experiment module (30) is configured to train each machine learning model (32) with a training dataset that is a subset of the dataset to produce a trained model for each machine learning model, and wherein the experiment module (30) is configured to evaluate each trained model with an evaluation dataset that is a subset of the dataset to produce the performance result for each machine learning model.

8. The machine learning system (10) of claims 1, 2, 3, 4, 5, 6 or 7, wherein the experiment module (30) is configured to cross validate each machine learning model (32) using at least one of leave-one-out cross validation and k-fold cross validation.

9. The machine learning system (10) of claims 1, 2, 3, 4, 5, 6, 7 or 8, further comprising a presentation module (44) configured to present the performance comparison statistics, wherein the presentation module (44) is configured to present the performance results for all of the machine learning models (32) in a unified format to facilitate comparison of the machine learning models (32).

10. A computerized method (100) for testing machine learning algorithms, the method comprising:
receiving (102) a dataset;
receiving (104) a selection of machine learning models (32), wherein each machine learning model (32) includes a machine learning algorithm and one or more associated parameter values;
training and evaluating (106) each machine learning model (32) to produce a performance result for each machine learning model (32);
aggregating (108) the performance results for all of the machine learning models (32) to form performance comparison statistics; and
presenting (110) the performance comparison statistics.

11. The method (100) of claim 10, wherein the dataset is a time-series dataset that includes a series of values of an observable measured in successive periods of time.

12. The method (100) of claims 10 or 11, further comprising, before the training and evaluating (106), global preprocessing (112) the dataset, and wherein the global preprocessing (112) includes at least one of discretization, independent component analysis, principal component analysis, elimination of missing data, feature selection, and feature extraction.

13. The method (100) of claims 10, 11 or 12, wherein at least one machine learning model (32) is a macro-procedure (36) that combines outcomes of an ensemble of micro-procedures (38), wherein each micro-procedure (38) includes a machine learning algorithm and one or more associated parameter values, and wherein the macro-procedure (36) is configured to combine the outcomes of the ensemble of micro-procedures (38) by at least one of cumulative value, maximum value, minimum value, median value, average value, mode value, most common value, and majority vote.

14. The method (100) of claims 10, 11, 12 or 13, wherein the training and evaluating (106) includes dividing (120) the dataset into a training dataset and an evaluation dataset, and wherein the training dataset and the evaluation dataset are complementary subsets of the dataset, wherein the training and evaluating (106) includes preprocessing (132) the training dataset to generate a preprocessing scheme and wherein the training and evaluating (106) includes preprocessing (134) the evaluation dataset with the preprocessing scheme.

15. The method (100) of claims 10, 11, 12, 13 or 14, wherein the training and evaluating (106) includes training (122) each machine learning model (32) with a training dataset that is a subset of the dataset to produce a trained model for each machine learning model (32), wherein the training and evaluating (106) includes evaluating (124) each trained model with an evaluation dataset that is a subset of the dataset to produce the performance result for each machine learning model (32), and wherein the evaluation dataset and the training dataset are complementary subsets of the dataset.
